(19) Europäisches Patentamt
European Patent Office
Office européen des brevets

(11) **EP 3 855 337 A1**

(12) **EUROPEAN PATENT APPLICATION**

(43) Date of publication:
**28.07.2021 Bulletin 2021/30**

(51) Int Cl.:
***G06F 30/20*** (2020.01)

(21) Application number: **20275015.4**

(22) Date of filing: **24.01.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Goodrich Corporation
Charlotte, NC 28217-4578 (US)**

(72) Inventor: **The designation of the inventor has not
yet been filed**

(74) Representative: **Dehns
St. Bride's House
10 Salisbury Square
London EC4Y 8JD (GB)**

(54) **EVALUATION OF AEROSPACE SYSTEMS**

(57)     A computer implemented method for evaluating an aerospace system comprises steps of providing a model of the aerospace system, wherein the model comprises a hybrid system model having a state space, providing a temporal formula that corresponds to a desired sequence of partitions of the state space, and attempting to falsify the logical complement of the temporal formula with respect to the model.

Fig. 1

**Description**

The present disclosure relates to techniques for evaluating aerospace systems.

Aerospace systems can be considered as Hybrid Systems (HS), that is, a complex dynamical system exhibiting a combination of discrete and continuous dynamics (e.g. a system where a digital controller interacts with a physical plant). A model of such a system may comprise a finite set of discrete variables, used to describe the control modes and whose changes may be modeled by a finite state machine, and a finite set of continuous variables, used to model the timed-evolution of physical quantities usually described by differential equations.

Unfortunately the applicability of exhaustive verification of a hybrid system with respect to a given property (i.e. mathematically proving that all the behaviors of the system satisfy the property) is limited to small size systems due to the complexity of exhaustive analysis. In such cases, lighter methods based on simulation are typically used. However, simulation can only reveal an error but does not permit proving the correctness of the system.

The Applicant believes that there remains scope for improvements to methods for evaluating aerospace systems.

The present invention provides a computer implemented method for evaluating an aerospace system, the method comprising:

>  providing a model of the aerospace system, wherein the model comprises a hybrid system model having a state space;
>  providing a temporal formula that corresponds to a sequence of partitions of the state space; and
>  attempting to falsify the logical complement of the temporal formula with respect to the model.

Falsification algorithms that determine a set of input signals to a hybrid system model such that the output of the model violates a given property (expressed as a temporal formula) have been developed in the context of evaluation of hybrid systems.

In various embodiments, the logical complement (i.e. the negation) of a temporal formula that corresponds to a desired sequence of partitions of the state space of a hybrid system model is passed to a falsification algorithm. If falsification of the logical complement of the temporal formula with respect to the model is successful, this means that it is possible to generate an appropriate set of input signals to the model that are able to guide the hybrid system across the desired sequence of state space partitions in the correct order.

The use of temporal logic provides a high level of confidence in the analysis. By limiting the analysis to a particular sequence of state space partitions (instead of the entire state space), the complexity of the analysis is considerably reduced.

Thus, by attempting to falsify the logical complement of the temporal formula with respect to the model, the complexity of the analysis is considerably reduced, while providing a high level of confidence in the results.

Various embodiments accordingly bridge the gap between the exhaustive and simulation approaches described above, and provide an improved method for evaluating an aerospace system.

The aerospace system may comprise any suitable aerospace system such as an aircraft or one or more component parts of an aircraft. Similarly, the model may be configured to model the entire aerospace system (e.g. aircraft) or may be configured to model one or more component parts (less than all) of the aerospace system (e.g. aircraft).

Examples of the aerospace system include the flight control system of an aircraft, the landing gear, antiskid system(s), skew detection system(s), electrical system(s), bleed system(s), hydraulic system(s), avionics, fuel system(s), fuel management system(s), tank gauging system(s), propulsion system(s), navigation system(s), communication system(s), ice protection system(s), cooling system(s), environmental control system(s), cabin air compressor system(s), life support system(s), instrumentation system(s), crew alert system(s), fire protection system(s), safety system(s), and so on.

The model is a hybrid system model and so may comprise a finite set of discrete variables and a finite set of continuous variables.

The finite set of discrete variables may be used to describe discrete states of the aerospace system (or subsystem). For example, the finite set of discrete variables may be used to describe one or more control modes of the aerospace system (e.g. a standing mode, a taxiing mode, a take-off mode, an en-route mode, a maneuvering mode, an approach mode, a landing mode of an aircraft, and so-on). Further examples include states of an anti-skid system (i.e. ON/OFF), engine operating modes (i.e. maximum mode, maximum continuous power mode, cruising power mode, idling power mode), fuel transfer modes (e.g. tank overflow, empty tank, pump failure), and so-on.

The finite set of continuous variables may be used to describe the time-evolution of one or more physical quantities of the aerospace system. Each variable of the finite set of continuous variables may be described by one or more differential equations. Examples of such physical quantities include the position, altitude, speed, direction, velocity, acceleration, orientation, angle, pressure, temperature, voltage, fuel level, fuel transfer, wheel speed, aircraft speed, braking force, timer(s), etc. of the aerospace system.

The state space is the set of all possible configurations of the model, i.e. the set of all the possible permutations of the variables.

The model may be configured to receive one or more input signals and to yield one or more states within the state space, e.g. in dependence on the received input signal(s) as well as in dependence upon the current state of the system.

Each of the input signals may be a static value or may change with time. Each of the input signals may change in a discrete or continuous manner.

Examples of input signals include one or more control parameters, e.g. input by an operator or pilot, or generated automatically by the aerospace system. Control parameters may include for example, an angle, degree, position, applied force, event duration, etc. of a control device such as a control yoke, control wheel, control stick, centre stick, side-stick, pedal, throttle control, button, (touchscreen) display, and the like.

The sequence of state space partitions will comprise a set of state space partitions that have some particular order in time, i.e. will comprise an initial state space partition, followed by one or more intermediate state space partitions, followed by a final (goal) state space partition. Each state space partition will comprise a sub-set of the state space of the hybrid system, and may comprise a single state of the state space, or a region of the state space comprising multiple states.

The sequence of state space partitions may be translated into the temporal formula, for example using signal temporal logic (STL) techniques.

The sequence of state space partitions may correspond to a desired behavior of the aerospace system.

As described above, by using a sequence of state space partitions, the complexity of the analysis is considerably reduced. By suitably defining an appropriate sequence of state space partitions that corresponds to a desired behavior of the system, the analysis can be targeted to some particular question regarding the system.

For example, it may be desired to determine whether the system is capable of behaving in accordance with the sequence of partitions, and/or it may be desired to determine an appropriate set of input signals that will cause the system to behave in accordance with the sequence.

In the former case, it may be desired, for example, to determine whether the aerospace system is capable of reaching a goal state from an initial state, while passing through one or more desired or necessary intermediate states. For example, it may be desired to determine whether the aerospace system (e.g. aircraft) is capable of coming to a stop (reaching a goal state) from an initial state in which the aircraft is airborne with a particular speed, etc., while passing through one or more changes of state necessary, e.g. during a landing phase, and/or while passing though one or more desired states, e.g. that may be known to provide improved performance such as improved efficiency.

In the latter case, it may be desired, for example, to determine an appropriate set of input signals that will cause the system to reach a goal state (such as coming to a stop) from an initial state (such as being airborne with a particular speed, etc.), while passing through one or more desired or necessary intermediate states (such as one or more changes of state necessary, e.g. during a landing phase, and/or one or more desired states that may be known to provide improved performance such as improved efficiency).

It will be appreciated that numerous other combinations of goal state, initial state and intermediate state(s) are possible.

The sequence of state space partitions may accordingly in general comprise an initial state space partition, followed by one or more intermediate state space partitions, followed by a goal state space partition, which may together describe a behavior of the aerospace system.

Thus, embodiments may provide a computer implemented method for determining whether an aerospace system is capable of a behavior, the method comprising:

> providing a model of the aerospace system, wherein the model comprises a hybrid system model having a state space;
> providing a temporal formula that corresponds to a sequence of partitions of the state space, wherein the sequence of partitions corresponds to the behavior; and
> attempting to falsify the logical complement of the temporal formula with respect to the model.

Embodiments also provide a computer implemented method for determining a set of input signals for causing an aerospace system to follow a behavior, the method comprising:

> providing a model of the aerospace system, wherein the model comprises a hybrid system model having a state space;
> providing a temporal formula that corresponds to a sequence of partitions of the state space, wherein the sequence of partitions corresponds to the behavior; and
> attempting to falsify the logical complement of the temporal formula with respect to the model.

In various embodiments, the method comprises determining the logical complement (i.e. the negation) of the temporal formula.

The method then comprises attempting to falsify the logical complement of the temporal formula with respect to the model, i.e. by passing the logical complement of the temporal formula to a falsification algorithm

The step of attempting to falsify the logical complement of the temporal formula with respect to the model may comprise determining a set of input signals to the model such that one or more output states of the model violate the logical complement of the temporal formula.

As such, if the falsification is successful, a set of input signals is generated that are able to guide the hybrid system across the sequence of state space partitions in the correct order. If the falsification is unsuccessful, then it may be determined that it is not possible to produce a set of input signals which are able to guide the hybrid system across the sequence of state space partitions in the correct order.

Where, as described above, the method comprises a method for determining whether an aerospace system is capable of a behavior, then if the falsification is successful then it may be determined that the aerospace system is capable of the behavior. If the falsification is unsuccessful then it may be determined that the aerospace system is incapable of the behavior.

Where, as described above, the method comprises a method for determining a set of input signals for causing an aerospace system to follow a behavior, then if the falsification is successful then it may be determined that the generated set of input signals will cause the aerospace system to follow the behavior. If the falsification is unsuccessful then it may be determined that it is not possible to produce a set of input signals which will cause the aerospace system to follow the behavior.

In various embodiments, in order to constrain the analysis to follow the sequence of state space partitions, the method may comprise generating a set of monitors by generating a monitor for each state space partition in the sequence, and then creating a harness model by integrating the set of monitors with the hybrid system model.

In these embodiments, the step of attempting to falsify the logical complement of the temporal formula with respect to the model may comprise attempting to falsify the logical complement of the temporal formula with respect to the harness model.

One monitor may be generated per state space partition of the sequence. Each monitor may be configured to determine whether a current state of the system corresponds to that monitor's partition. Each monitor may be activated (i.e. the monitor output may be switched to True) only once the associated partition is visited.

The outputs of the monitors may be used not only to check that the partitions sequence is correctly crossed, but also to facilitate the falsification algorithm. This allows the decomposition of the global problem into smaller local problems (one for each monitor), thus reducing the complexity of the analysis.

As described above, each of the input signals may change in a discrete or continuous manner, e.g. depending on the nature of the particular control parameter of the aerospace system to which the input signal corresponds. The way in which each input signal changes may also depend on the nature of the control parameter to which the input signal corresponds. Thus, each input signal may have a particular shape, such as a step, ramp or sinusoidal shape, depending on the nature of the control parameter to which the input signal corresponds.

Known falsification algorithms do not take into account constraints on the generated input signals. That is, they can produce arbitrary inputs without any kinds of predefined features, for example in terms of shape, maximum amplitude, frequency, time properties, and so on.

In various embodiments, in order to constrain the analysis to take into account the appropriate shape for each input signal, the method may comprise providing one or more input signal models, and creating a (the) harness model by integrating the one or more input signal models with the hybrid system model.

The method may accordingly comprise creating a harness model by integrating the set of monitors and the one or more input signal models with the hybrid system model.

The step of attempting to falsify the logical complement of the temporal formula with respect to the model may comprise attempting to falsify the logical complement of the temporal formula with respect to the harness model.

Each of the input signal models may be configured to correspond to the particular input (e.g. control parameter) of the aerospace system in question. Each input signal model may have any suitable shape, such as a step shape, a ramp shape, a sinusoidal shape, and so on.

Each input signal model may be used to model one or more high-level features of each input signal, for example by setting one or more parameters. For example, a generic step-type signal may be characterized by (i) a step time, (ii) an initial value, and (iii) a final value.

In various embodiments, the hybrid system model is coupled with the one or more input signal models, and the falsification algorithm is used to synthesize the input parameters (rather than the input signal itself).

As described above, the output of the falsification algorithm may be either a set of input signals that is capable of guiding the hybrid system through the sequence of state space partitions in the correct order, or an indication that it is not possible to generate a set of input signals that is capable of guiding the hybrid system through the sequence of state space partitions in the correct order. These outputs may subsequently be used in any suitable manner.

Where, as described above, the method comprises a method for determining whether an aerospace system is capable of a behavior, then if it is determined that the aerospace system is capable of the behavior, then the method may subsequently comprise manufacturing an aerospace system in accordance with the model.

If it is determined that the aerospace system is incapable of the behavior, then the method may comprise redesigning or otherwise modifying the (model of the) aerospace system, and then determining whether the modified aerospace system is capable of the behavior, and so on.

Thus, the present invention also provides an aerospace system designed using the method described above.

Where, as described above, the method comprises a method for determining a set of input signals for causing an aerospace system to follow a behavior, then if it is determined that the generated set of input signals will cause the aerospace system to follow the behavior, then the method may subsequently comprise operating an aerospace system using the generated set of input signals.

If it is determined that it is not possible to produce a set of input signals which will cause the aerospace system to follow the behavior, then method may comprise redesigning or otherwise modifying the (model of the) aerospace system, and then determining a set of input signals for causing an aerospace system to follow the behavior, and so on.

Thus, the present invention also provides a method of operating an aerospace system, comprising using the generated set of input signals to operate the aerospace system.

The present invention also provides a data processing system comprising one or more processors configured to perform the method described above.

The present invention also provides a computer program comprising computer software code for performing the method described above when the program is run on data processing means.

Certain preferred embodiments of the present disclosure will now be described in greater detail, by way of example only and with reference to the following figures, in which:

Figure 1 is a flow diagram illustrating the techniques according to various embodiments;
Figure 2 is a high-level overview of an example Landing Gear System (LGS) model; and
Figures 3-7 shows inputs and outputs to the model of Figure 2 generated using the algorithm of various embodiments.

Aerospace systems can be considered as Hybrid Systems (HS), namely a complex dynamical system exhibiting a combination of discrete and continuous dynamics evolution (e.g. a system where a digital controller interacts with a physical plant).

A model of such a system comprises a finite set of discrete variables, used to describe the control modes and whose changes may be modeled by a finite state machine, and a finite set of continuous variables, used to model the timed-evolution of physical quantities usually described by differential equations.

As described above, the applicability of exhaustive verification of a hybrid system with respect to a given property (i.e. mathematically proving that all the behaviors of the system satisfy the property) is limited to small size systems due to the complexity of exhaustive analysis. In such cases, lighter methods based on simulation may be used. However, simulation can only reveal an error but does not permit proving the correctness of the system.

Hence it is desired to develop tools able to bridge the gap between these two approaches for guaranteeing some level of confidence in the results.

Various embodiments provide a Guided State-Space Exploration for Hybrid Systems (GSSE4HS) algorithm. Various embodiments can be exploited for many objectives, by guiding a hybrid system across a predefined set of states.

In particular, given as input a model of a hybrid system and a sequence of state-space partitions, the algorithm tries to control the system execution, by generating appropriate input signals, such that the simulated time evolution of the system follows the given sequence of states.

The algorithm is built on the top of a falsification algorithm for hybrid systems, i.e. an algorithm for the generation of input that lead the system to violate a given property.

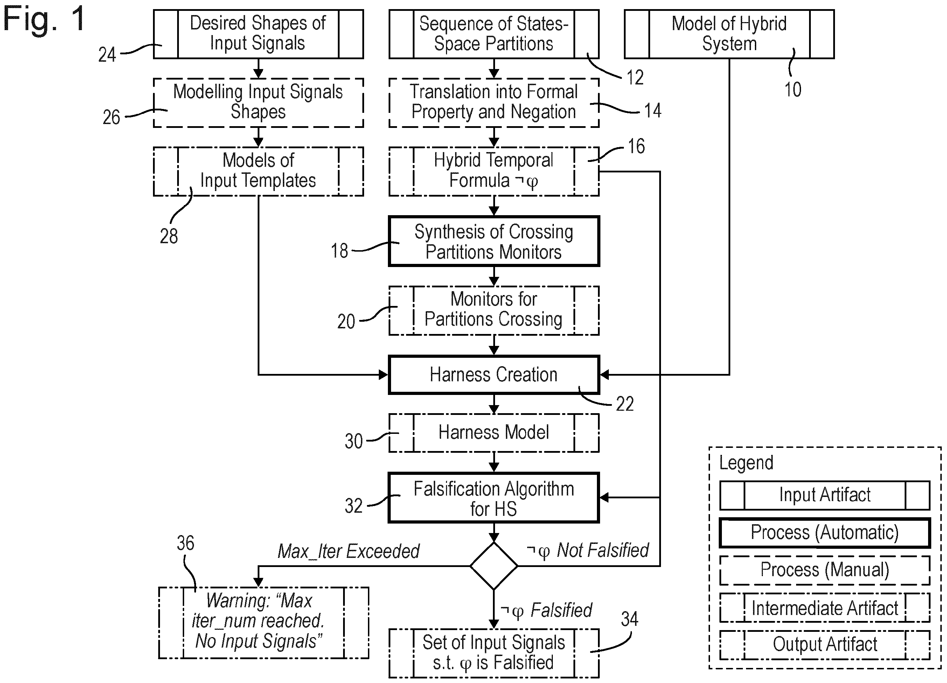

The algorithm comprises a sequence of steps as illustrated by Figure 1.

As shown in Figure 1, a model of a hybrid system 10 is provided, e.g. by a user.

A sequence of state space partitions 12 (as defined by a user) is translated into an STL-like formal temporal formula $\varphi$ and is negated (step 14), so as to determine the logical complement of the temporal formula, i.e. $\neg\varphi$ (step 16).

For each partition of the sequence a monitor is automatically generated (step 18) so as to generate a set of monitors 20. Each monitor is used to check whether the current state of the system belongs to the corresponding partition or not.

As also shown in Figure 1, a set 24 of desired shapes of interest for input signals to the hybrid system model may be provided, e.g. by a user, and a model may be produced for each input signal shape (step 26) so as to provide a set of input signal models 28. For example, a step signal can be obtained by synthesizing the parameters corresponding to the step time, the initial value and the final value. A user may select a particular model from a set of models for each input signal. Models for step shapes, ramp shapes, sinusoidal shapes, and so on may be provided. Additional models may be added by a user.

In step 22, the hybrid system model 10 is integrated with the monitors and input templates so as to create a harness model 30. The logical complement of the formula φ (i.e. ¬φ) 16 and the hybrid system model integrated with the monitors and input templates 30 are then passed to the falsification algorithm.

The falsification algorithm then attempts to falsify ¬φ according to the monitors and templates (step 32).

As a consequence, if the falsification algorithm succeeds, then the generated signals 34 are in the selected shapes, according to the templates, and are able to guide the system to cross the monitored partitions in the correct order. Otherwise the user is notified that the desired inputs cannot be generated (step 36).

In the analysis, each monitor is "activated" (i.e. the monitor output switches to True) only once the associated partition is visited. The outputs of the monitors are used not only to check that the partitions sequence is correctly crossed, but also to facilitate the falsification algorithm. This allows the decomposition of the global problem into smaller local problems (one for each monitor), thereby reducing the complexity of the analysis.

Known falsification algorithms do not take into account constraints on the generated input signals. That is, they can produce arbitrary inputs without any kind of predefined features, for example in terms of shape(s), maximum amplitude, frequency, time properties, and so on.

In order to cope with this limitation, the harness model is enriched with socalled input templates, used to model specific input types.

A template is used to model the high-level features of a signal, by the definition of specific parameters. For example, a generic step-type signal may be characterized by (i) a step time, (ii) an initial value, and (iii) a final value. Each specific parameter assignment results in a specific instance of a step-type signal.

Hence, the original model is coupled with the input templates, and the falsification algorithm is used to synthesize the input parameters (rather than the input signal itself). For example, in the step-type case, the initial value could be fixed to zero, and the falsification algorithm could be used to find values for step time and final value in order to falsify the given property.

As such, the harness may comprise (a) the original model, (b) the monitors modeling the partition sequences, and (c) the input templates modeling specific signal-types. The original model is left unchanged, and the additional components do not interfere with the system behavior.

It will be appreciated that various embodiments can be used for a number of objectives.

For example, various embodiments can be used for optimization. The algorithm can be directly exploited for optimization problems (e.g. when in order to minimize a cost function, a hybrid system shall proceed along a sequence of given states/sets of states).

Various embodiments can be used for controllability. Being able to bring the system under test (SUT) to a given state, the algorithm can be used for achieving controllability (this capability is important when dealing with tests applicable only when the SUT is in a-priori known state).

Various embodiments can be used for Automatic Test Generation (ATG). Integrated with a metric for measuring the state-space coverage, the algorithm can be deployed in a workflow for the Automatic Test Generation (ATG) at system level, which can reduce development time, and costs for aerospace systems.

In order to illustrate the potential applications of the Guided State-Space Exploration for Hybrid Systems (GSSE4HS) algorithm, a simplified example of an aircraft system that can be modelled as a hybrid system will now be described.

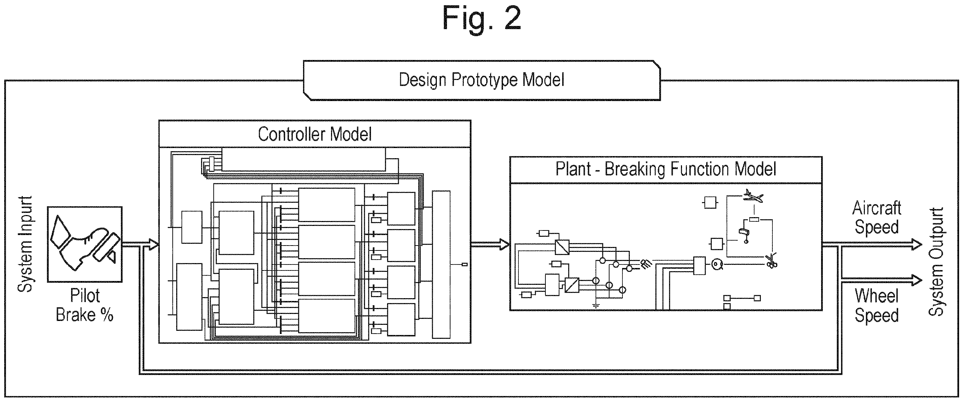

Figure 2 depicts a high-level overview of a Landing Gear System (LGS), where a digital controller interacts with a continuous plant for achieving several goals according to a set of specific requirements. In the example, the input signal to the model is the percentage of pressure exerted by the pilot on the brake pedal. The outputs that are relevant for the described experiments are the aircraft speed and the wheel speed.

Table 1 shows a subset of the requirements for the Anti-Skid Subsystem of the Landing Gear System of Figure 1.

| ID | Title | Description | Antecedent (Formal Version) |
|---|---|---|---|
| 1 | Anti-skid Actuation | When active, the anti-skid system shall order brake release when the speed of a wheel drops below 0.87 times the aircraft speed. | $antiSkid == True$ <br> $wheelSpeed \leq 0.87 \cdot aircraftSpeed$ |
| 2 | Anti-skid Relaxation | When active, the anti-skid system shall order brake action when the speed of a wheel is less than or equal to the aircraft speed, and greater than 0.92 times the aircraft speed. | $antiSkid == True$ <br> $wheelSpeed \geq 0.92 \cdot aircraftSpeed$ <br> $wheelSpeed \leq aircraftSpeed$ |
| 3 | Maximum Wheel Skid | When active, the anti-skid system shall guarantee that wheel speed is always greater than 0.8 times aircraft speed | $antiSkid == True$ |

Table 1

As shown in Table 1, Requirement 1 defines the behavior of the system in case of wheel locking. It specifies that under certain conditions, expressed in terms of outputs constraints, the system must react by releasing the brake (in order to avoid wheel locking). Requirement 2 is the dual condition of brake re-engagement after the wheel stops slipping. Finally, Requirement 3 bounds the maximum allowed wheel speed.

The last column of the table highlights the precondition of the corresponding requirement, i.e. the condition that must be satisfied in order to activate the requirement.

An example of applying the GSSE4HS algorithm for optimization will now be described.

Suppose that a correct implementation of the Landing Gear System depicted by Figure 2 (i.e. an implementation that correctly satisfies the requirements shown in Table 1) is obtained by deploying specific physical brake components with their own characteristic features. For example, suppose that the multiple disc brakes and the brake linings installed are such that their life expectancy is maximized when they operate inside specific ranges of temperatures that vary depending on the wheel speed.

This relationship between temperature and speed can be naturally encoded by a corresponding sequence of states-space partitions. The identified sequence is such that if each partition is correctly visited during a braking action, then the component degradation is optimal.

The GSSE4HS algorithm can be exploited to check whether such a braking action exists, by running it over the LGS model and the partitions sequence.

For example, the analysis may establish that is never possible to arrest the aircraft in $t$ seconds by starting from a specific speed $v$ and by always remaining inside the temperature ranges defined by the partitions sequence. On the contrary, if this is possible, the algorithm is able to synthesize a specific braking signal that meets the constraints.

Running the above analysis using several different initial conditions and parameters may guide the synthesis of a general optimal braking style that reduces component degradation.

An example of applying the GSSE4HS algorithm to controllability-like determinations will now be described.

Controllability is concerned with the problem of guiding a system from an initial state, $x(t_0) = x_0$, to another state $x(t_1) = x_1$, in a finite time $t_1 - t_0 < \infty$.

Returning to the LGS example and the requirements given in Table 1, it may be desired to check whether Requirement 1 can be activated starting from the state where the wheel speed is exactly equal to the aircraft speed (i.e. $wheelSpeed == aircraftSpeed$). According to the requirements of Table 1, this corresponds to checking whether there exists an input signal (i.e. a pilot braking action) such that the aircraft would reach, in a finite time, a state that satisfies the constraint expressed by $wheelSpeed \leq 0.87 \cdot aircraftSpeed$.

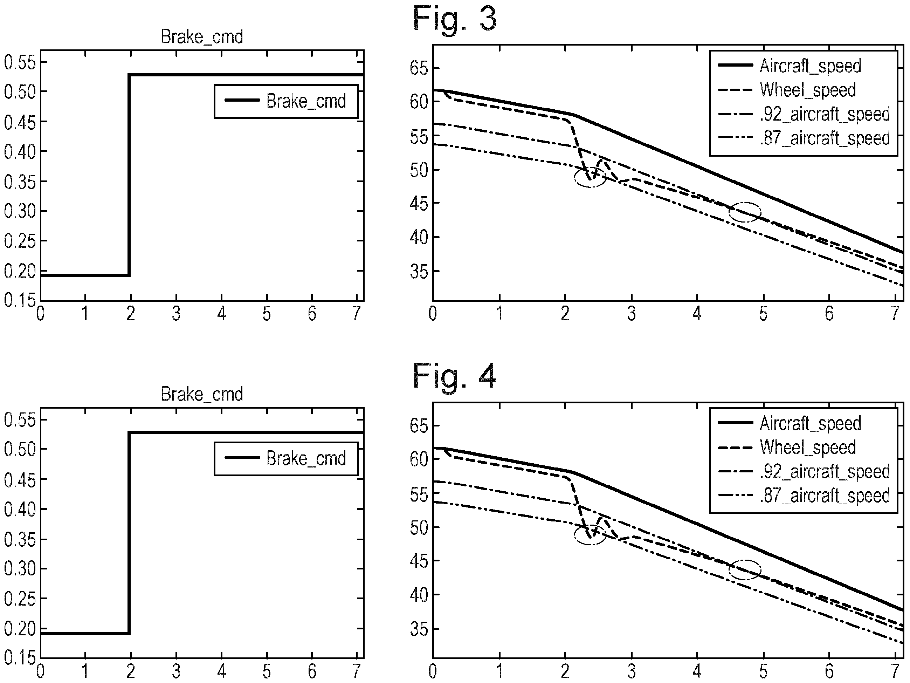

Figure 3 shows the result of the application of the method to the problem described above, i.e. the generation of an input signal able to guide the system from the initial condition $wheelSpeed == aircraftSpeed$ to the condition $wheelSpeed \leq 0.87 \cdot aircraftSpeed.$

In particular, the left hand side of Figure 3 shows the generated input (a step-shaped signal), while the right hand side depicts the time-evolution of the system state according to the application of the generated input, where the first and second lines (from the top, at the right hand side) represent the evolution of the aircraft speed and the wheel speed, respectively, while the third and the fourth lines respectively identify the condition where the wheel speed is equal to 0.92 and 0.87 times the aircraft speed.

As shown in Figure 3, initially the two speed coincide (i.e. $wheelSpeed == aircraftSpeed$). Shortly after 2 seconds, the wheel speed drops in response to the input (i.e. an increment, at $t = 2$ $seconds$ of the pressure on the brake pedal, as shown by the left hand side of Figure 3).

Consequently, the wheel speed decreases below 0.87 times the aircraft speed, i.e. $wheelSpeed \leq 0.87 \cdot aircraftSpeed$, corresponding to the leftmost circle of the right hand side of Figure 3, thereby achieving the goal of guiding the system from the initial value to a specific state.

An example of applying the GSSE4HS algorithm for Automatic Test Generation for a Hybrid System will now be described.

A natural extension of the applications described above, is the automatic generation of "intelligent" test cases to check whether the System Under Test (SUT) satisfies the requirements of Table 1.

For example, consider Requirement 2. The simplest way to check whether the SUT is compliant with Requirement 2 is to generate an input signal that activates the requirement, i.e. generates an input that is able to guide the SUT to a state that satisfies the condition,

$$0.92 \cdot aircraftSpeed \leq wheelSpeed \leq aircraftSpeed.$$

Having such an input, one can apply it to test whether the SUT correctly reacts according to the requirement, i.e. by effectively re-engaging the brake to reduce the speed. However, in case of success, the test cannot be used for assessing the correctness of the system with the required confidence.

Indeed, according to well-known standards, studies and theory about Requirements-Based Testing (also known as Functional Testing), it is required to produce a number of tests that, according to a given coverage metric, cover as much as possible the space of the requirements.

For example, considering again Requirement 2, one possibility is to test the SUT using the following different conditions:

- Condition 1: the sequence of the states that the SUT has visited is such that (a) it first satisfies the constraint *wheelSpeed* $\leq 0.87 \cdot$ *aircraftSpeed* (thereby activating Requirement 1), and (b) it then activates Requirement 2 (i.e. $0.92 \cdot$ *aircraftSpeed* $\leq$ *wheelSpeed* $\leq$ *aircraftSpeed*).
- Condition 2: the sequence of the states that the SUT visits is such that (a) it activates Requirement 2 (i.e. $0.92 \cdot$ *aircraftSpeed* $\leq$ *wheelSpeed* $\leq$ *aircraftSpeed*) and (b) it never satisfies the constraint *wheelSpeed* $\leq 0.87 \cdot$ *aircraftSpeed* (thereby never activating Requirement 1).

Additionally, the above conditions can be combined with different input-types (i.e. step-shaped inputs, ramp-shaped inputs, and so on).

Figure 4 shows the results of applying the algorithm in order to produce a test case that satisfies Condition 1 via a step-type input signal.

In particular, the left hand side of Figure 4 shows the test generated, that is a step-shaped input signal. The right hand side of Figure 4 shows the results of the application of the test depicted by the left hand side, where it can be seen that the SUT visits a sequence of states where, in order, (i) Requirement 1 is activated (corresponding to the area inside the rightmost circle), (ii) Requirement 1 is deactivated and contextually Requirement 2 is activated (represented by the leftmost circle). The test is done in the last condition (i.e. Requirement 2 activated) by comparing the actual output of the SUT with the expected output according to Requirement 2.

Additional test cases, generated by combining Conditions 1, 2 and different input types are shown by Figures 4-7.

Figure 4 shows a first test case (left hand side) and the results of its application on the SUT (right hand side). The test case is automatically generated by combining Condition 1 and imposing "step-shape" as input condition. Thus, the test case is a step-shaped input signal, according to the selected input template.

The first and the second lines (from the top, at the right hand side) represent the evolution of the aircraft speed and the wheel speed, respectively. The third and fourth lines identify the two thresholds defined by the requirements preconditions, i.e. 0.92 and 0.87 times the aircraft speed. The leftmost circle is placed in correspondence with entering the activation region of Requirement 1, while the rightmost circle is placed in correspondence with entering the activation region of Requirement 2.

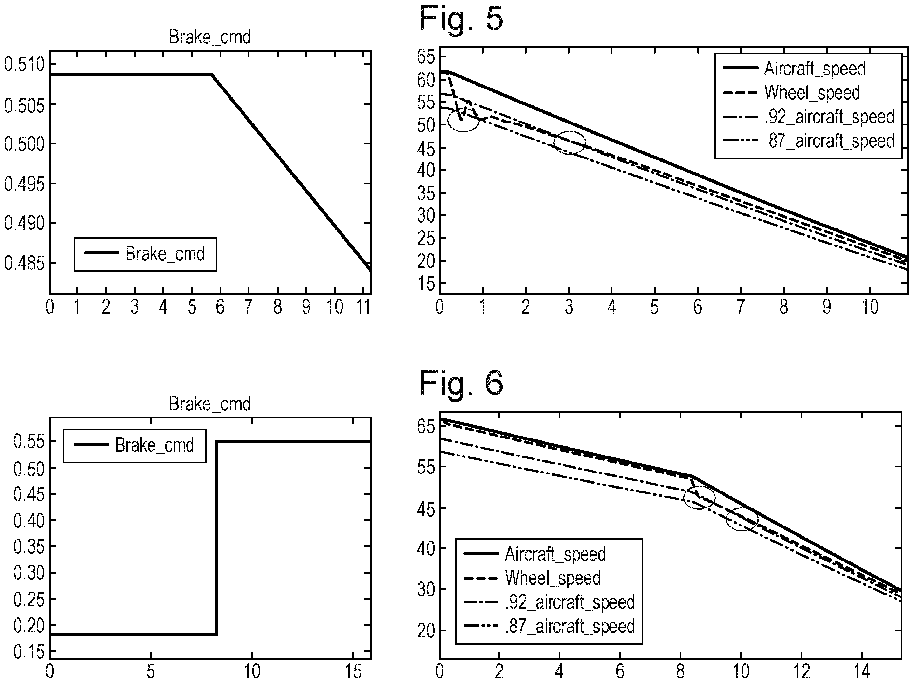

Figure 5 shows a second Test Case (left hand side) and the results of its application on the SUT (right hand side). The test case is automatically generated by combining Condition 1 and by imposing "ramp-shape" as an input condition. Thus, the test case is a ramp-shaped input signal, according to the selected input template.

The first and the second lines (from the top, at the right hand side of the graph) represent the evolution of the aircraft speed and the wheel speed, respectively. The third and fourth lines identify the two thresholds defined by the requirements preconditions, i.e. 0.92 and 0.87 times the aircraft speed. The leftmost circle is placed in correspondence with entering the activation region of Requirement 1, while the rightmost circle is placed in correspondence with entering the activation region of Requirement 2.

Figure 6 shows a third test case (left hand side) and the results of its application on the SUT (right hand side). The test case is automatically generated by combining Condition 2 and by imposing "step-shape" as input condition. Thus, the test case is a step-shaped input signal, according to the selected input template.

The first and the second lines (from the top, at the right hand side) represent the evolution of the aircraft speed and the wheel speed, respectively. The third and fourth lines identify the two thresholds defined by the requirements preconditions, i.e. 0.92 and 0.87 times the aircraft speed. The leftmost circle is placed in correspondence with entering a region where no requirements are activated, while the rightmost circle one is placed in correspondence with entering the activation region of Requirement 2.

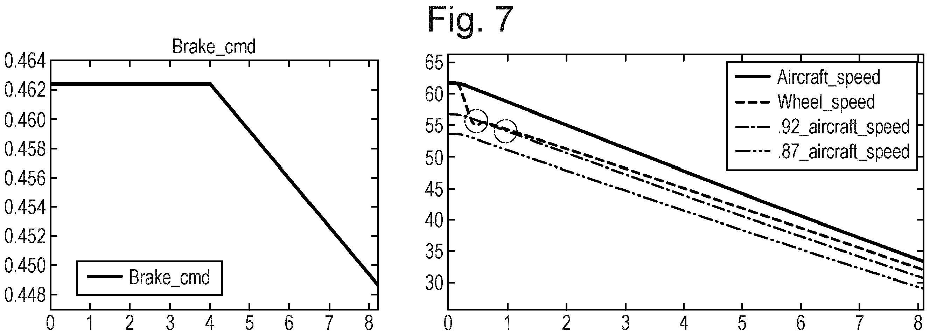

Figure 7 shows a fourth test case (left hand side) and the results of its application on the SUT (right hand side). The test case is automatically generated by combining Condition 2 and by imposing "ramp-shape" as input condition. Thus, the test case is a ramp-shaped input signal, according to the selected input template.

The first and the second lines (from the top, at the right hand side) represent the evolution of the aircraft speed and the wheel speed, respectively. The third and fourth lines identify the two thresholds defined by the requirements preconditions, i.e. 0.92 and 0.87 times the aircraft speed. The leftmost circle is placed in correspondence with entering a region where no requirements are activated, while the rightmost circle is placed in correspondence with entering the activation region of Requirement 2.

**Claims**

1. A computer implemented method for evaluating an aerospace system, the method comprising:

   providing a model of the aerospace system, wherein the model comprises a hybrid system model having a state space;
   providing a temporal formula that corresponds to a desired sequence of partitions of the state space; and
   attempting to falsify a logical complement of the temporal formula with respect to the model.

2. The method of claim 1, wherein the step of attempting to falsify the logical complement of the temporal formula with respect to the model comprises attempting to determine a set of input signals to the model such that one or more outputs and/or states of the model violate the logical complement of the temporal formula.

3. The method of claim 2, wherein the set of input signals comprises one or more control parameters for the aerospace system.

4. The method of claim 2 or 3, further comprising outputting the determined set of input signals if the falsification is successful.

5. The method of claim 2, 3 or 4, further comprising outputting an indication that an appropriate set of input signals cannot be determined if the falsification is unsuccessful.

6. The method of any one of the preceding claims, wherein the sequence of state space partitions comprises an initial state space partition, followed by one or more intermediate state space partitions, followed by a goal state space partition, and wherein the sequence of state space partitions describes a behavior of the aerospace system.

7. The method of claim 6, wherein if the falsification is successful then it is determined that the aerospace system is capable of the behavior.

8. The method of claim 7, further comprising manufacturing an aerospace system in accordance with the model.

9. The method of claim 6, 7 or 8, wherein if the falsification is successful then it is determined that the set of input signals will cause the aerospace system to follow the behavior.

10. The method of claim 9, further comprising operating an aerospace system using the generated set of input signals.

11. The method of any one of the preceding claims, further comprising:

    generating a set of monitors by generating a monitor for each state space partition in the sequence; and
    creating a harness model by integrating the set of monitors with the hybrid system model;
    wherein the step of attempting to falsify the logical complement of the temporal formula with respect to the model comprises attempting to falsify the logical complement of the temporal formula with respect to the harness model.

**12.** The method of claim 11, wherein each of the monitors is configured to determine whether a current state of the system corresponds to that monitor's partition.

**13.** The method of any one of the preceding claims, further comprising:

providing one or more input signal models; and
creating a harness model by integrating the one or more input signal models with the hybrid system model;
wherein the step of attempting to falsify the logical complement of the temporal formula with respect to the model comprises attempting to falsify the logical complement of the temporal formula with respect to the harness model.

**14.** A data processing system comprising one or more processors configured to perform the method of any one of the preceding claims.

**15.** A computer program comprising computer software code for performing the method of any one of claims 1 to 13 when the program is run on data processing means.

Fig. 1

Model of Hybrid System — 10

Sequence of States-Space Partitions — 12

Translation into Formal Property and Negation — 14

Hybrid Temporal Formula ¬φ — 16

Synthesis of Crossing Partitions Monitors — 18

Monitors for Partitions Crossing — 20

Harness Creation — 22

Harness Model — 30

Falsification Algorithm for HS — 32

¬φ Not Falsified

¬φ Falsified

Set of Input Signals s.t. φ is Falsified — 34

Max_Iter Exceeded

Warning: "Max iter_num reached. No Input Signals" — 36

Desired Shapes of Input Signals — 24

Modelling Input Signals Shapes — 26

Models of Input Templates — 28

Legend:
Input Artifact
Process (Automatic)
Process (Manual)
Intermediate Artifact
Output Artifact

Fig. 2

Design Prototype Model

Controller Model

Plant - Breaking Function Model

System Input

Pilot Brake %

System Output

Wheel Speed

Aircraft Speed

Fig. 3

Fig. 4

Fig. 5

Fig. 6

Brake_cmd

Brake_cmd

Aircraft_speed
Wheel_speed
.92_aircraft_speed
.87_aircraft_speed

Fig. 7

Brake_cmd

Aircraft_speed
Wheel_speed
.92_aircraft_speed
.87_aircraft_speed

Brake_cmd

EP 3 855 337 A1

Europäisches
Patentamt

European
Patent Office

Office européen
des brevets

**EUROPEAN SEARCH REPORT**

Application Number

EP 20 27 5015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | REISSIG GUNTHER ET AL: "Feedback Refinement Relations for the Synthesis of Symbolic Controllers", IEEE TRANSACTIONS ON AUTOMATIC CONTROL, vol. 62, no. 4, 22 June 2016 (2016-06-22), pages 1781-1796, XP011644434, DOI: 10.1109/TAC.2016.2593947 [retrieved on 2017-03-27] * the whole document * * abstract * * Definition VI.2 * * section IX * * section IX.B, paragraphs 1 to 4 * * figure 7 * | 1-15 | INV. G06F30/20 |
| X | KWON YOUNGMIN ET AL: "Bounded Model Checking of Hybrid Systems for Control", IEEE TRANSACTIONS ON AUTOMATIC CONTROL, vol. 60, no. 11, 30 March 2015 (2015-03-30), pages 2961-2976, XP011588629, DOI: 10.1109/TAC.2015.2417839 [retrieved on 2015-10-26] * the whole document * * section I, paragraph 4 * * section I, paragraph 5 * * section VI * * section VIII, paragraph 2 * * section VIII, paragraph 3 * * figures 8,9,10 * | 1-15 | |
| | -/-- | | TECHNICAL FIELDS SEARCHED (IPC) G06F |

The present search report has been drawn up for all claims

| Place of search | Date of completion of the search | Examiner |
|---|---|---|
| Munich | 6 April 2020 | Rungger, Matthias |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 20 27 5015

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUNG JAY HOON ET AL: "Quantitative Model Checking for a Resilient Control System", PROCEEDINGS OF THE IEEE SYMPOSIUM SERIES ON COMPUTATIONAL INTELLIGENCE, 6 December 2019 (2019-12-06), pages 462-469, XP033717148, DOI: 10.1109/SSCI44817.2019.9002793 [retrieved on 2020-02-18] * the whole document * * abstract * * section I. Introduction * * section II.B. Hybrid System Model * * section IV.B. PD Controller Design Using LTLC Model Checking * * figures 1,3 *     ----- | 1-15 | |

TECHNICAL FIELDS
SEARCHED      (IPC)

The present search report has been drawn up for all claims

| Place of search | Date of completion of the search | Examiner |
|---|---|---|
| Munich | 6 April 2020 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P04C01)

page 2 of 2